# EUROPEAN PATENT SPECIFICATION

(11) **EP 4 478 738 B1**
(45) Date of publication and mention of the grant of the patent: **24.12.2025**
(21) Application number: 23752390.7
(22) Date of filing: 09.02.2023
(51) Int. Cl.: A45C 13/00, H04R 1/32, G06F 1/16, A45C 11/00, F16M 13/00, H04M 1/02, H04R 1/28, H04R 3/04, F16M 11/10, H04M 1/03

(54) **AUDIO PROCESSING METHOD AND APPARATUS, AND ELECTRONIC DEVICES**
AUDIOVERARBEITUNGSVERFAHREN UND -VORRICHTUNG SOWIE ELEKTRONISCHE VORRICHTUNGEN
PROCÉDÉ ET APPAREIL DE TRAITEMENT AUDIO ET DISPOSITIFS ÉLECTRONIQUES

(30) Priority: 11.02.2022 CN 202210127948
(43) Date of publication of application: 18.12.2024
(73) Proprietor: VIVO MOBILE COMMUNICATION CO., LTD., Dongguan, Guangdong 523863 (CN)
(72) Inventor: ZOU, Yuzhong, Dongguan, Guangdong 523863 (CN)
(74) Representative: Lavoix
(86) International application number: PCT/CN2023/075127
(87) International publication number: WO 2023/151610

(56) References cited:
- CN-A- 101 895 802
- CN-A- 101 895 802
- CN-A- 103 179 487
- CN-A- 103 179 487
- CN-A- 113 286 025
- CN-A- 113 315 859
- CN-A- 114 501 227
- CN-U- 205 581 714
- CN-U- 205 581 714
- JP-A- 2001 169 376
- JP-A- 2003 323 230
- US-A1- 2005 253 957
- US-B1- 6 292 573

## Description

### TECHNICAL FIELD

This application pertains to the field of electronic product technologies, and specifically relates to an audio processing method and apparatus and an electronic device.

### BACKGROUND

Currently, to highlight the appearance effect of electronic devices such as mobile phones, it is common to increase the coverage area of the decorative ring around the rear camera. However, the increase in coverage area of the decorative ring around the rear camera occupies more space of the device, making it difficult for the electronic device to balance the overall appearance effect and the overall space utilization. CN 101895802A discloses a mobile terminal device. CN 205 581 714 U discloses a retractable notebook computer speaker.

It can be seen that the electronic devices in the related art have the difficulty in balancing the overall appearance effect and the overall space utilization.

### SUMMARY

This application is intended to provide an audio processing method and apparatus and an electronic device, as defined in the appended set of claims, so as to solve the problem of electronic devices in the related art that it is difficult to balance overall appearance effect and overall space utilization.

In the embodiments of this application, because the cavity of the expandable connection component communicates with the acoustic chamber of the sound module, a volume of the acoustic chamber of the sound module changes with the volume of the cavity of the expandable connection component. In addition, the volume of the cavity of the expandable connection component can change corresponding to the rotation angle of the cover plate, which means that the volume of the cavity of the expandable connection component changes with the rotation angle of the cover plate, so the volume of the acoustic chamber of the sound module can be adjusted by adjusting the rotation angle of the cover plate, thereby achieving the purpose of enriching the decorative ring assembly.

Moreover, the cavity of the expandable connection component communicates with the acoustic chamber of the sound module, which is equivalent that the size of the acoustic chamber of the sound module is extended, so the space of the electronic device occupied by the acoustic chamber of the sound module can be reduced. Therefore, the arrangement of the decorative ring assembly not only improves overall appearance effect of the electronic device, but also allows for expansion of the volume of the acoustic chamber of the sound module and improves space utilization of the electronic device, thereby achieving the purpose of balancing the overall appearance effect and overall space utilization of the electronic device.

For additional aspects and advantages of this application, some will be given in the following description, and some will become apparent in the following description or will be understood in the practice of this application.

### BRIEF DESCRIPTION OF DRAWINGS

The above and/or additional aspects and advantages of this application will become obvious and easy to understand from the description of the embodiments with reference to the following drawings.
FIG. 1 is a first schematic structural diagram of an electronic device according to an embodiment of this application;
FIG. 2 is a second schematic structural diagram of an electronic device according to an embodiment of this application;
FIG. 3 is a third schematic structural diagram of an electronic device according to an embodiment of this application;
FIG. 4 is a fourth schematic structural diagram of an electronic device according to an embodiment of this application;
FIG. 5 is a fifth schematic structural diagram of an electronic device according to an embodiment of this application;
FIG. 6 is a sixth schematic structural diagram of an electronic device according to an embodiment of this application;
FIG. 7 is a flowchart of an audio processing method according to an embodiment of this application;
FIG. 8 is a structural diagram of an audio processing apparatus according to an embodiment of this application;
FIG. 9 is a structural diagram of an electronic device according to an embodiment of this application; and
FIG. 10 is a structural diagram of an electronic device according to another embodiment of this application.

### DESCRIPTION OF EMBODIMENTS

The embodiments of this application are described in detail below. Examples of the embodiments are shown in the accompanying drawings, and reference signs that are the same or similar always indicate the same or similar elements or elements with the same or similar functions. The embodiments described below with reference to the accompanying drawings are illustrative and merely for explaining this application, and cannot be construed as any limitations on this application.

A feature modified by the term "first" or "second" in the specification and claims of this application can explicitly or implicitly include one or more such features. In the description of this application, unless otherwise stated, "a plurality of" means two or more. In addition, in the specification and claims, "and/or" indicates at least one of the connected objects, and the character "/" generally indicates an "or" relationship between the contextually associated objects.

In the description of this application, it should be noted that unless otherwise specified and defined explicitly, the terms "mounting", "connection", and "joining" should be understood in their general senses. For example, they may refer to a fixed connection, a detachable connection, or an integral connection; may refer to a mechanical connection or an electrical connection; and may refer to a direct connection, an indirect connection via an intermediate medium, or an internal communication between two elements. Persons of ordinary skill in the art can understand specific meanings of these terms in this application as appropriate to specific situations.

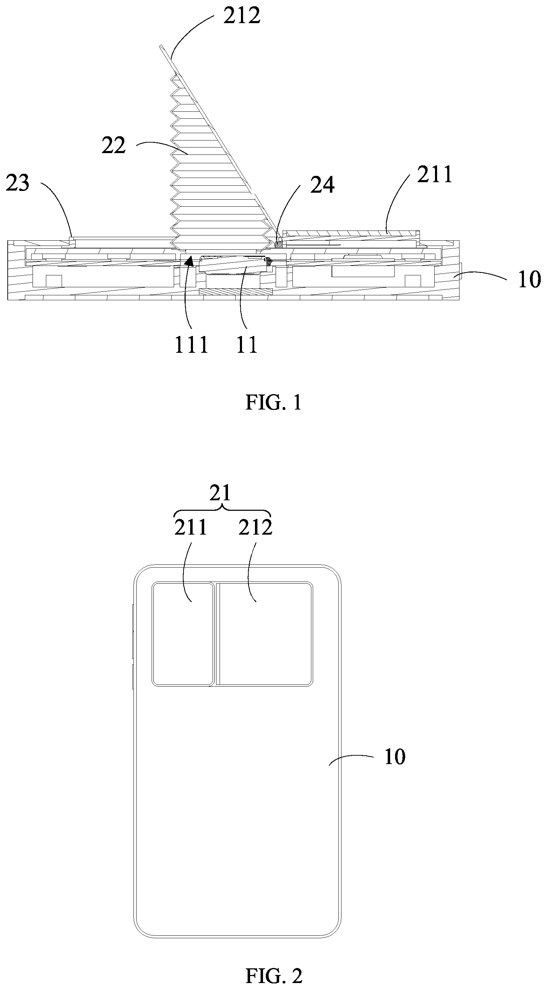

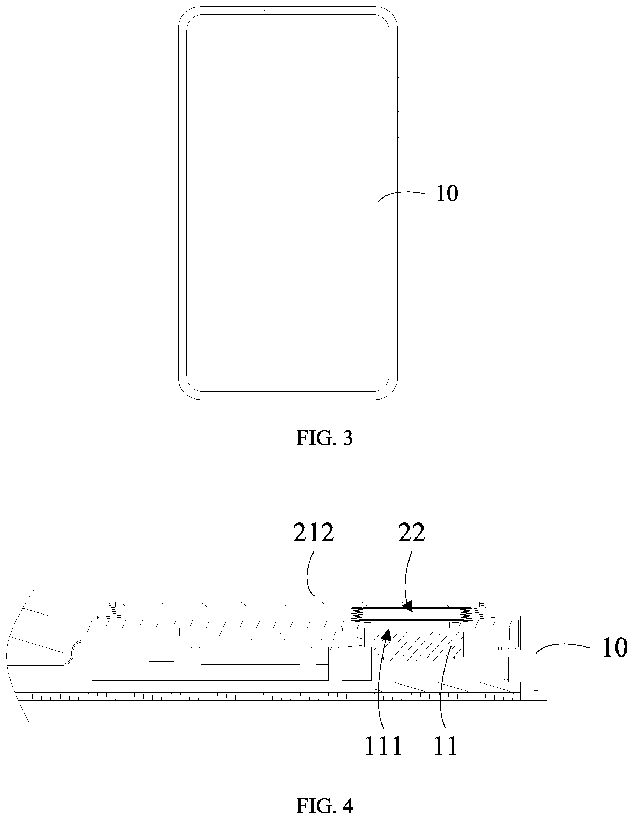

As shown in FIG. 1 to FIG. 6, embodiments of this application provide an electronic device. The electronic device includes a device body 10 and a decorative ring assembly, where the device body 10 is provided with a first opening, and the decorative ring assembly is assembled onto the device body 10 through the first opening; and
the decorative ring assembly includes a cover plate 21 and an expandable connection component 22, where the cover plate 21 corresponds to a sound module 11 of the device body 10, the expandable connection component 22 has a cavity, a first end of the expandable connection component 22 is connected to the cover plate 21, a second end of the expandable connection component 22 is connected to the sound module 11, and the cavity communicates with an acoustic chamber 111 of the sound module 11; where
the cover plate 21 is able to rotate relative to the device body 10, and a volume of the cavity corresponds to a rotation angle of the cover plate 21.

In these embodiments, because the cavity of the expandable connection component 22 communicates with the acoustic chamber 111 of the sound module 11, a volume of the acoustic chamber 111 of the sound module 11 changes with the volume of the cavity of the expandable connection component 22. In addition, the volume of the cavity of the expandable connection component 22 can change corresponding to the rotation angle of the cover plate 21, which means that the volume of the cavity of the expandable connection component 22 changes with the rotation angle of the cover plate 21, so the volume of the acoustic chamber 111 of the sound module 11 can be adjusted by adjusting the rotation angle of the cover plate 21, thereby achieving the purpose of enriching the decorative ring assembly.

Moreover, the cavity of the expandable connection component 22 communicates with the acoustic chamber 111 of the sound module 11, which is equivalent that the size of the acoustic chamber 111 of the sound module 11 is extended, so the space of the electronic device occupied by the acoustic chamber 111 of the sound module 11 can be reduced. Therefore, the arrangement of the decorative ring assembly not only improves overall appearance effect of the electronic device, but also allows for expansion of the volume of the acoustic chamber of the sound module 11 and improves space utilization of the electronic device, thereby achieving the purpose of balancing the overall appearance effect and overall space utilization of the electronic device.

In addition, expanding the volume of the acoustic chamber 111 of the sound module 11 can also improve the sound effect of the sound module 11.

In some embodiments, the cavity of the expandable connection component 22 may communicate with a rear acoustic chamber of the sound module 11, which means that the cavity of the expandable connection component 22 can be configured to expand a volume of the rear acoustic chamber of the sound module 11. For example, when the cover plate 21 is in an open state, the volume of the cavity of the expandable connection component 22 is larger than the volume of the cavity of the expandable connection component 22 when the cover plate 21 is in a closed state, thereby increasing the rear acoustic chamber of the sound module 11. In this way, with the same stereo playback effect ensured, an audio parameter of the sound module 11 can be adjusted to reduce power consumption of the sound module 11, thereby improving endurance of the electronic device. In addition, expanding the volume of the rear acoustic chamber of the sound module 11 can also improve the low-frequency effect of the sound module 11 and enhance the stereo effect, thereby providing users with better audiovisual experience.

The expandable connection component 22 has a compressed state and an expanded state, and the compressed state and expanded state of the expandable connection component 22 are associated with the rotation angle of the cover plate 21. For example, when the rotation angle of the cover plate 21 relative to the device body 10 changes from small to large, the cover plate 21 can drive the expandable connection component 22 to change from the compressed state to the expanded state. Accordingly, when the rotation angle of the cover plate 21 relative to the device body 10 changes from large to small, the cover plate 21 can drive the expandable connection component 22 to change from the expanded state to the compressed state.

It can be understood that the volume of the cavity of the expandable connection component 22 in the compressed state is smaller than the volume of the cavity of the expandable connection component 22 in the expanded state.

The expandable connection component 22 may be an expandable tube structure, and the cavity hermetically communicates with the acoustic chamber 111 of the sound module 11, so that the cavity functions as an extended acoustic chamber of the sound module 11.

Optionally, the device body 10 further includes a main board bracket and a circuit board, where the main board bracket is provided with a through hole, allowing the cavity of the expandable connection component 22 to communicate with the acoustic chamber 111 of the sound module 11.

The sound module 11 further includes a circuit board and sealing foam. The circuit board can be electrically connected to a main board of the electronic device to implement audio output of the sound module 11. The sealing foam is configured to fill a gap between the circuit board and the main board bracket to improve the sealing effect of the acoustic chamber 111 of the sound module 11.

The cover plate 21 includes a first cover plate 211 and a second cover plate 212, the first cover plate 211 corresponds to a rear camera (not shown in the figure) of the device body 10, and the second cover plate 212 corresponds to the sound module 11; and
the first end of the expandable connection component 22 is connected to the second cover plate 212; where
the second cover plate 212 is able to rotate relative to the device body 10, and the volume of the cavity corresponds to a rotation angle of the second cover plate 212.

In these embodiments, controlling only rotation of the second cover plate 212 corresponding to the sound module 11 can reduce a driving force for driving rotation of the second cover plate 212, and allow the first cover plate 211 to provide continuous and stable protection for the rear camera.

In some embodiments, the second cover plate 212 can be driven to rotate so as to drive the expandable connection component 22 to switch between the compressed state and the expanded state, thereby adjusting the volume of the acoustic chamber of the sound module 11 and achieving the purpose of improving the low-frequency effect of the sound module 11.

Optionally, during rotation of the second cover plate 212, the second cover plate 212 is able to switch between a closed state and an open state; and
a volume of the cavity in the closed state is smaller than a volume of the cavity in the open state.

It can be understood that the compressed state of the expandable connection component 22 corresponds to the closed state of the second cover plate 212, and the expanded state of the expandable connection component 22 corresponds to the open state of the second cover plate 212.

Further optionally, when the second cover plate 212 is in the open state, the second cover plate 212 is configured to support the device body 10.

In these embodiments, the second cover plate 212 in the open state can serve as a support foot for the device body 10, which avoids the need to arrange a separate support structure for the electronic device, allows users to view the displayed content of the electronic device in landscape mode, and effectively enriches functions of the decorative ring assembly.

Optionally, the expandable connection component 22 includes a first connecting end face connected to the second cover plate 212 and a second connecting end face connected to the sound module 11; where
a cross-sectional area of the first connecting end face is larger than a cross-sectional area of the second connecting end face.

In these embodiments, the cross-sectional area of the first connecting end face being larger than the cross-sectional area of the second connecting end face can increase a volume increment of the expandable connection component 22 in the expanded state, thereby achieving the purpose of further increasing the volume of the acoustic chamber of the sound module 11.

In some embodiments, an expandable body of the expandable connection component 22 may be arranged in a tubular shape, and the first connecting end face may be hermetically connected to the second cover plate 212 by a sealant, so as to improve the sealing effect of the acoustic chamber of the sound module 11.

Optionally, as shown in FIG. 1, the decorative ring assembly further includes a decorative ring bracket 23, the decorative ring bracket 23 is assembled onto the device body 10 through the first opening, and the first cover plate 211 is fixedly connected to the decorative ring bracket 23 and the second cover plate 212 is rotatably connected to the decorative ring bracket 23.

The decorative ring bracket 23 is provided with a mounting groove, and the second cover plate 212 can be assembled in the mounting groove and can rotate relative to the decorative ring bracket 23 in the mounting groove. In addition, the decorative ring assembly further includes a fastener 24, where the fastener 24 is configured to fasten the second cover plate 212 onto the decorative ring bracket 23, so as to prevent loosening of the second cover plate 212 during flipping from affecting performance of the electronic device.

During assembling of the decorative ring assembly, the second cover plate 212 can be inserted from the bottom of the decorative ring bracket 23 and move upward until mounting portions on two sides of the second cover plate 212 are completely embedded into the mounting groove of the decorative ring bracket 23, and then assembled onto the decorative ring bracket 23 through the fastener 24, so as to prevent the second cover plate 212 from loosening during flipping.

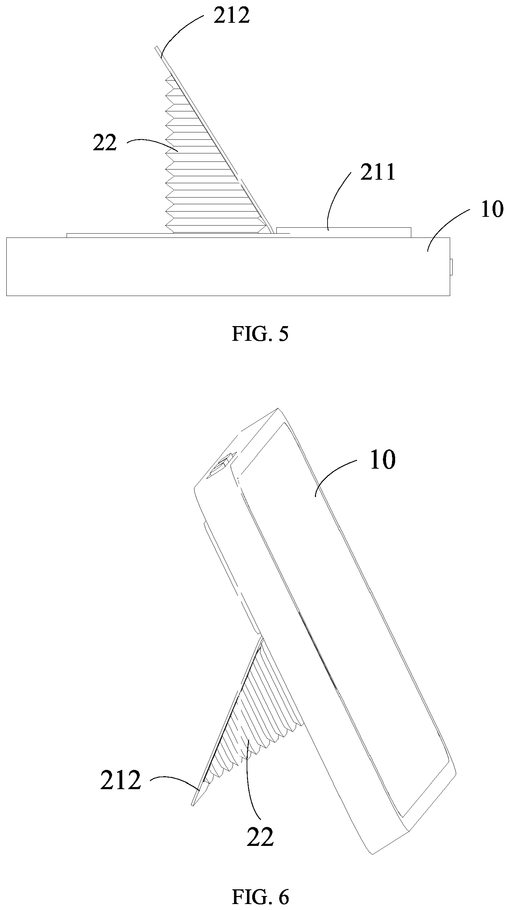

As shown in FIG. 6, when opened, the second cover plate 212 can form a bracket of the electronic device, so that the electronic device can be placed horizontally on a desktop, allowing users to watch videos in landscape mode or perform landscape-oriented operations.

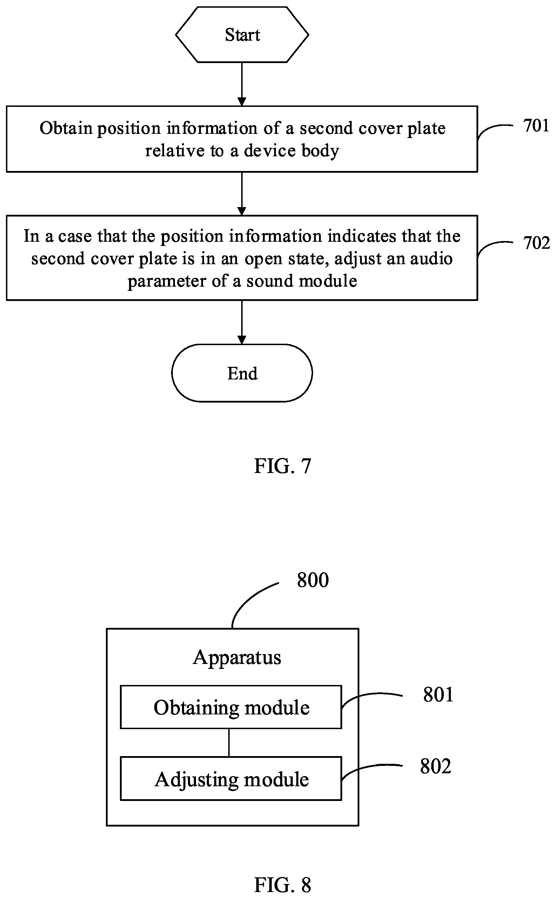

As shown in FIG. 7, an embodiment of this application further provides an audio processing method. The audio processing method can be applied to the electronic device in the foregoing embodiments, and the audio processing method includes the following steps.

Step 701: Obtain position information of the cover plate relative to the device body.

In this step, the position information of the cover plate relative to the device body can be obtained by a detection module such as a position sensor disposed in the electronic device, so as to determine whether the cover plate is in an open state.

In some embodiments, the position information of the cover plate relative to the device body can be detected by a position sensor disposed on the cover plate.

Specifically, the position sensor may be a distance sensor, a Hall sensor, or the like.

In some other embodiments, the rotation angle of the cover plate can be detected by an angle sensor disposed on the cover plate, so as to determine the position information of the cover plate relative to the device body.

Step 702: Adjust an audio parameter of the sound module in a case that the position information indicates that the cover plate is in an open state.

In this step, in a case that the detected position information indicates that the cover plate is in the open state, that is, in a case that the volume of the acoustic chamber of the sound module is effectively extended, the audio parameter of the sound module can be adjusted to improve the audio output effect of the sound module.

For example, in a case that the detected position information indicates that the cover plate is in the open state, with the same stereo playback effect ensured, the audio parameter of the sound module can be adjusted (for example, reducing audio output power of the sound module) to reduce the power consumption of the sound module, thereby improving the endurance of the electronic device. In addition, expanding the volume of the rear acoustic chamber of the sound module can also improve the low-frequency effect of the sound module and enhance the stereo effect, thereby providing users with better audiovisual experience.

In some embodiments, a control instruction can be output by a processor of the electronic device to reduce the audio output power of the sound module, thereby achieving the purpose of reducing the power consumption of the sound module.

It should be noted that the implementations of the electronic device are also applicable to the embodiment of the audio processing method, with the same technical effects achieved. Details are not described herein again.

According to the audio processing method provided in this embodiment of this application, the position information of the cover plate relative to the device body is obtained; and the audio parameter of the sound module is adjusted in a case that the position information indicates that the cover plate is in the open state. This can improve the audio output effect of the sound module.

The audio processing method provided in this embodiment of this application can be performed by an audio processing apparatus. In the embodiments of this application, the audio processing apparatus performing the audio processing method is used as an example to describe the audio processing apparatus provided in the embodiments of this application.

As shown in FIG. 8, an embodiment of this application further provides an audio processing apparatus. The apparatus 800 includes:
an obtaining module 801 configured to obtain position information of the cover plate relative to the device body; and
an adjusting module 802 configured to adjust an audio parameter of the sound module in a case that the position information indicates that the cover plate is in an open state.

Optionally, the adjusting module 802 is specifically configured to reduce audio output power of the sound module.

The audio processing apparatus in this embodiment of this application may be an electronic device or a component in an electronic device such as an integrated circuit or chip. The electronic device may be a terminal or other devices than terminals. For example, the electronic device may be a mobile phone, a tablet computer, a notebook computer, a palmtop computer, an in-vehicle electronic device, a mobile internet device (Mobile Internet Device, MID), an augmented reality (augmented reality, AR) or virtual reality (virtual reality, VR) device, a robot, a wearable device, an ultra-mobile personal computer (ultra-mobile personal computer, UMPC), a netbook, a personal digital assistant (personal digital assistant, PDA), or the like, or may be a network attached storage (Network Attached Storage, NAS), a personal computer (personal computer, PC), a television (television, TV), a teller machine, a self-service machine, or the like. This is not specifically limited in the embodiments of this application.

The audio processing apparatus in this embodiment of this application may be an apparatus having an operating system. The operating system may be an Android (Android) operating system, an iOS operating system, or another possible operating system. This is not specifically limited in the embodiments of this application.

The audio processing apparatus provided in this embodiment of this application can implement the processes implemented in the method embodiment in FIG. 7. To avoid repetition, details are not described herein again.

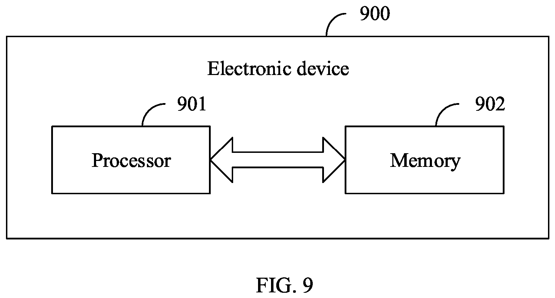

Optionally, as shown in FIG. 9, an embodiment of this application further provides an electronic device 900 including a processor 901 and a memory 902. The memory 902 stores a program or instructions capable of running on the processor 901. When the program or instructions are executed by the processor 901, the steps of the foregoing audio processing method embodiment are implemented, with the same technical effects achieved. To avoid repetition, details are not described herein again.

It should be noted that the electronic device in this embodiment of this application includes the foregoing mobile electronic devices and non-mobile electronic devices.

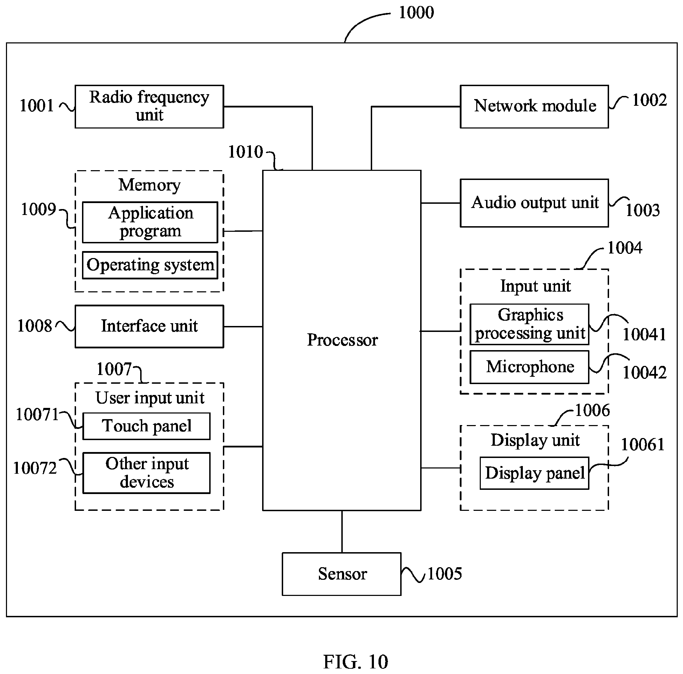

FIG. 10 is a structural diagram of an electronic device for implementing the embodiments of this application.

The electronic device 1000 includes but is not limited to components such as a radio frequency unit 1001, a network module 1002, an audio output unit 1003, an input unit 1004, a sensor 1005, a display unit 1006, a user input unit 1007, an interface unit 1008, a memory 1009, and a processor 1010.

Persons skilled in the art can understand that the electronic device 1000 may further include a power supply (for example, a battery) for supplying power to the components. The power supply may be logically connected to the processor 1010 via a power management system, so that functions such as charge management, discharge management, and power consumption management are implemented via the power management system. The structure of the electronic device shown in FIG. 10 does not constitute any limitation on the electronic device. The electronic device may include more or fewer components than shown in the figure, or combine some of the components, or arrange the components differently. Details are not described herein.

The processor 1010 is configured to: obtain position information of the cover plate relative to the device body; and adjust an audio parameter of the sound module in a case that the position information indicates that the cover plate is in an open state.

Optionally, the processor 1010 is configured to reduce audio output power of the sound module.

It should be understood that in the embodiments of this application, the input unit 1004 may include a graphics processing unit (Graphics Processing Unit, GPU) 10041 and a microphone 10042. The graphics processing unit 10041 processes image data of a static picture or a video that is obtained by an image capture apparatus (for example, a camera) in an image capture mode or a video capture mode. The display unit 1006 may include a display panel 10061. The display panel 10061 may be configured in a form of a liquid crystal display, an organic light-emitting diode display, or the like. The user input unit 1007 includes at least one of a touch panel 10071 and other input devices 10072. The touch panel 10071 is also referred to as a touchscreen. The touch panel 10071 may include two parts: a touch detection apparatus and a touch controller. The other input devices 10072 may include but are not limited to a physical keyboard, a function button (for example, a volume control button or an on/off button), a trackball, a mouse, and a joystick. Details are not described herein.

The memory 1009 may be configured to store software programs and various data. The memory 1009 may mainly include a first storage area for storing programs or instructions and a second storage area for storing data. The first storage area may store an operating system, an application program or instructions required by at least one function (for example, a sound play function or an image play function), and the like. Additionally, the memory 1009 may be a volatile memory or a non-volatile memory, or the memory 1009 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 1009 in the embodiments of this application includes but is not be limited to these and any other applicable types of memories.

The processor 1010 may include one or more processing units. Optionally, the processor 1010 may integrate an application processor and a modem processor. The application processor primarily processes operations involving an operating system, user interface, application program, or the like. The modem processor primarily processes radio communication signals, for example, being a baseband processor. It can be understood that the modem processor may alternatively be not integrated in the processor 1010.

An embodiment of this application further provides a readable storage medium. The readable storage medium stores a program or instructions, and when the program or instructions are executed by a processor, the processes of the foregoing audio processing method embodiment are implemented, with the same technical effects achieved. To avoid repetition, details are not described herein again.

The processor is a processor in the electronic device in the foregoing embodiments. The readable storage medium includes a computer-readable storage medium such as a computer read-only memory ROM, a random access memory RAM, a magnetic disk, or an optical disc.

An embodiment of this application further provides a chip. The chip includes a processor and a communication interface, where the communication interface is coupled to the processor, and the processor is configured to run a program or instructions to implement the processes of the foregoing audio processing method embodiment, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application provides a computer program product, where the program product is stored in a storage medium. When the program product is executed by at least one processor, the processes of the foregoing audio processing method embodiment are implemented, with the same technical effects achieved. To avoid repetition, details are not described herein again.

It should be noted that in this specification, the terms "include", "comprise", or any of their variants are intended to cover a non-exclusive inclusion, such that a process, method, article, or apparatus that includes a series of elements includes not only those elements but also other elements that are not expressly listed, or further includes elements inherent to such process, method, article, or apparatus. Without more restrictions, an element preceded by the statement "includes a..." does not preclude the presence of other identical elements in the process, method, article, or apparatus that includes the element. In addition, it should be noted that the scope of the method and apparatus in the embodiments of this application is not limited to functions being performed in the order shown or discussed, but may further include functions being performed at substantially the same time or in a reverse order, depending on the functions involved. For example, the described method may be performed in an order different from the order described, and steps may be added, omitted, or combined. In addition, features described with reference to some examples may be combined in other examples.

Based on the foregoing description of the embodiments, persons skilled in the art can clearly understand that the method in the foregoing embodiments can be implemented through software on a necessary general hardware platform or certainly through hardware only, but in many cases, the former is the more preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, a network device, or the like) to perform the methods described in the embodiments of this application.

## Claims

1. An electronic device, comprising a device body (10) and a decorative ring assembly, wherein the device body (10) is provided with a first opening, and the decorative ring assembly is assembled onto the device body (10) through the first opening; and
the decorative ring assembly comprises a cover plate (21) and an expandable connection component (22), wherein the cover plate (21) corresponds to a sound module (11) of the device body (10), the expandable connection component (22) has a cavity, a first end of the expandable connection component (22) is connected to the cover plate (21), a second end of the expandable connection component (22) is connected to the sound module (11), and the cavity communicates with an acoustic chamber (111) of the sound module (11); wherein
the cover plate (21) is able to rotate relative to the device body (10), and a volume of the cavity corresponds to a rotation angle of the cover plate (21);
**characterized in that** the cover plate (21) comprises a first cover plate (211) and a second cover plate (212), the first cover plate (211) corresponds to a rear camera of the device body (10), and the second cover plate (212) corresponds to the sound module (11); and
the first end of the expandable connection component (22) is connected to the second cover plate (212); wherein
the second cover plate (212) is able to rotate relative to the device body (10), and the volume of the cavity corresponds to a rotation angle of the second cover plate (212).

2. The electronic device according to claim 1, wherein during rotation of the second cover plate (212), the second cover plate (212) is able to switch between a closed state and an open state; and
a volume of the cavity in the closed state is smaller than a volume of the cavity in the open state.

3. The electronic device according to claim 2, wherein the expandable connection component (22) comprises a first connecting end face connected to the second cover plate (212) and a second connecting end face connected to the sound module (11); wherein
a cross-sectional area of the first connecting end face is larger than a cross-sectional area of the second connecting end face.

4. The electronic device according to claim 3, wherein an expandable body of the expandable connection component (22) is arranged in a tubular shape, and the first connecting end face is hermetically connected to the second cover plate (212) by a sealant.

5. The electronic device according to any one of claims 1 to 4, wherein the decorative ring assembly further comprises a decorative ring bracket (23), the decorative ring bracket (23) is assembled onto the device body (10) through the first opening, and the first cover plate (211) is fixedly connected to the decorative ring bracket (23) and the second cover plate (212) is rotatably connected to the decorative ring bracket (23).

6. An audio processing method, applied to the electronic device according to any one of claims 1 to 5, wherein the electronic device comprises a device body (10), a cover plate (21), and a sound module (11), and the method comprises:
obtaining (701) position information of the cover plate (21) relative to the device body (10); and
adjusting (702) an audio parameter of the sound module (11) in a case that the position information indicates that the cover plate (21) is in an open state.

7. The method according to claim 6, wherein the audio parameter is audio output power, and the adjusting (702) an audio parameter of the sound module (11) comprises:
reducing the audio output power of the sound module (11).

8. An audio processing apparatus (800), applied to the electronic device according to any one of claims 1 to 5, wherein the electronic device comprises a device body (10), a cover plate (21), and a sound module (11), and the apparatus comprises:
an obtaining module (801) configured to obtain position information of the cover plate (21) relative to the device body (10); and
an adjusting module (802) configured to adjust an audio parameter of the sound module (11) in a case that the position information indicates that the cover plate (21) is in an open state.

9. An electronic device (900), comprising a processor (901) and a memory (902), wherein the memory (902) stores a program or instructions capable of running on the processor (901), and when the program or instructions are executed by the processor (901), the steps of the audio processing method according to claim 6 or 7 are implemented.

10. A readable storage medium, wherein the readable storage medium stores a program or instructions, and when the program or instructions are executed by a processor, the steps of the audio processing method according to claim 6 or 7 are implemented.

11. A computer program product, wherein the program product is stored in a non-volatile storage medium, and the program product is executed by at least one processor to implement the steps of the audio processing method according to claim 6 or 7.

12. A chip, wherein the chip comprises a processor and a communication interface, the communication interface is coupled to the processor, and the processor is configured to run a program or instructions to implement the steps of the audio processing method according to claim 6 or 7.

## Patentansprüche

1. Elektronische Vorrichtung, umfassend einen Vorrichtungskörper (10) und eine Zierringanordnung, wobei der Vorrichtungskörper (10) mit einer ersten Öffnung versehen ist und die Zierringanordnung durch die erste Öffnung auf dem Vorrichtungskörper (10) montiert wird; und
die Zierringanordnung eine Abdeckplatte (21) und eine ausdehnbare Verbindungskomponente (22) umfasst, wobei die Abdeckplatte (21) einem Klangmodul (11) des Vorrichtungskörpers (10) entspricht, die ausdehnbare Verbindungskomponente (22) einen Hohlraum aufweist, ein erstes Ende der ausdehnbaren Verbindungskomponente (22) mit der Abdeckplatte (21) verbunden ist, ein zweites Ende der ausdehnbaren Verbindungskomponente (22) mit dem Klangmodul (11) verbunden ist und der Hohlraum mit einer akustischen Kammer (111) des Klangmoduls (11) in Kommunikation ist; wobei
die Abdeckplatte (21) in der Lage ist, um in Bezug auf den Vorrichtungskörper (10) zu drehen, und ein Volumen des Hohlraums einem Drehwinkel der Abdeckplatte (21) entspricht;
**dadurch gekennzeichnet, dass** die Abdeckplatte (21) eine erste Abdeckplatte (211) und eine zweite Abdeckplatte (212) umfasst, die erste Abdeckplatte (211) einer Rückkamera des Vorrichtungskörpers (10) entspricht und die zweite Abdeckplatte (212) dem Klangmodul (11) entspricht; und
das erste Ende der ausdehnbaren Verbindungskomponente (22) mit der zweiten Abdeckplatte (212) verbunden ist; wobei
die zweite Abdeckplatte (212) in der Lage ist, in Bezug auf den Vorrichtungskörper (10) zu drehen, und das Volumen des Hohlraums einem Drehwinkel der zweiten Abdeckplatte (212) entspricht.

2. Elektronische Vorrichtung nach Anspruch 1, wobei während einer Drehung der zweiten Abdeckplatte (212) die zweite Abdeckplatte (212) in der Lage ist, zwischen einem geschlossenen Zustand und einem offenen Zustand zu wechseln; und
ein Volumen des Hohlraums in dem geschlossenen Zustand kleiner ist als ein Volumen des Hohlraums in dem offenen Zustand.

3. Elektronische Vorrichtung nach Anspruch 2, wobei die ausdehnbare Verbindungskomponente (22) eine erste Verbindungsstirnfläche, die mit der zweiten Abdeckplatte (212) verbunden ist, und eine zweite Verbindungsstirnfläche, die mit dem Klangmodul (11) verbunden ist, umfasst; wobei
eine Querschnittsfläche der ersten Verbindungsstirnfläche größer ist als eine Querschnittsfläche der zweiten Verbindungsstirnfläche.

4. Elektronische Vorrichtung nach Anspruch 3, wobei ein ausdehnbarer Körper der ausdehnbaren Verbindungskomponente (22) rohrförmig angeordnet ist und die erste Verbindungsstirnfläche durch ein Dichtmittel hermetisch mit der zweiten Abdeckplatte (212) verbunden ist.

5. Elektronische Vorrichtung nach einem der Ansprüche 1 bis 4, wobei die Zierringanordnung ferner eine Zierringhalterung (23) umfasst, die Zierringhalterung (23) durch die erste Öffnung auf den Vorrichtungskörper (10) montiert ist und die erste Abdeckplatte (211) fest mit der Zierringhalterung (23) verbunden ist und die zweite Abdeckplatte (212) drehbar mit der Zierringhalterung (23) verbunden ist.

6. Audioverarbeitungsverfahren, angewandt auf die elektronische Vorrichtung nach einem der Ansprüche 1 bis 5, wobei die elektronische Vorrichtung einen Vorrichtungskörper (10), eine Abdeckplatte (21) und ein Klangmodul (11) umfasst und das Verfahren Folgendes umfasst:
Erlangen (701) von Positionsinformationen der Abdeckplatte (21) in Bezug auf den Vorrichtungskörper (10); und
Einstellen (702) eines Audioparameters des Klangmoduls (11) in einem Fall, dass die Positionsinformationen angeben, dass die Abdeckplatte (21) in einem offenen Zustand ist.

7. Verfahren nach Anspruch 6, wobei der Audioparameter Audioausgangsleistung ist, und das Einstellen (702) eines Audioparameters des Klangmoduls (11) Folgendes umfasst:
Reduzieren der Audioausgangsleistung des Klangmoduls (11).

8. Audioverarbeitungsgerät (800), angewandt auf die elektronische Vorrichtung nach einem der Ansprüche 1 bis 5, wobei die elektronische Vorrichtung einen Vorrichtungskörper (10), eine Abdeckplatte (21) und ein Klangmodul (11) umfasst und das Gerät Folgendes umfasst:
ein Erlangungsmodul (801), das konfiguriert ist, um Positionsinformationen der Abdeckplatte (21) in Bezug auf den Vorrichtungskörper (10) zu erlangen; und
ein Einstellmodul (802), das konfiguriert ist, um einen Audioparameter des Klangmoduls (11) einzustellen, wenn die Positionsinformationen angeben, dass die Abdeckplatte (21) in einem offenen Zustand ist.

9. Elektronische Vorrichtung (900), umfassend einen Prozessor (901) und einen Speicher (902), wobei der Speicher (902) ein Programm oder Anweisungen speichert, die in der Lage sind, auf dem Prozessor (901) zu laufen, und wenn das Programm oder die Anweisungen von dem Prozessor (901) ausgeführt werden, die Schritte des Audioverarbeitungsverfahrens nach Anspruch 6 oder 7 implementiert werden.

10. Lesbares Speichermedium, wobei das lesbare Speichermedium ein Programm oder Anweisungen speichert, und wenn das Programm oder die Anweisungen von einem Prozessor ausgeführt wird/werden, werden die Schritte des Audioverarbeitungsverfahrens nach Anspruch 6 oder 7 implementiert.

11. Computerprogrammprodukt, wobei das Programmprodukt in einem nichtflüchtigen Speichermedium gespeichert ist und das Programmprodukt von mindestens einem Prozessor ausgeführt wird, um die Schritte des Audioverarbeitungsverfahrens nach Anspruch 6 oder 7 zu implementieren.

12. Chip, wobei der Chip einen Prozessor und eine Kommunikationsschnittstelle umfasst, die Kommunikationsschnittstelle mit dem Prozessor verbunden ist und der Prozessor konfiguriert ist, um ein Programm oder Anweisungen auszuführen, um die Schritte des Audioverarbeitungsverfahrens nach Anspruch 6 oder 7 zu implementieren.

## Revendications

1. Dispositif électronique comprenant un corps de dispositif (10) et un ensemble d'anneau décoratif, dans lequel le corps de dispositif (10) est pourvu d'une première ouverture, et l'ensemble d'anneau décoratif est assemblé sur le corps de dispositif (10) à travers la première ouverture ; et
l'ensemble d'anneau décoratif comprend une plaque de recouvrement (21) et un composant de connexion extensible (22), dans lequel la plaque de recouvrement (21) correspond à un module sonore (11) du corps de l'appareil (10), le composant de connexion extensible (22) présente une cavité, une première extrémité du composant de connexion extensible (22) est connectée à la plaque de recouvrement (21), une deuxième extrémité du composant de connexion extensible (22) est connectée au module sonore (11), et la cavité communique avec une chambre acoustique (111) du module sonore (11) ; dans lequel
la plaque de recouvrement (21) peut tourner par rapport au corps de l'appareil (10), et un volume de la cavité correspond à un angle de rotation de la plaque de recouvrement (21) ;
**caractérisé par le fait que** la plaque de recouvrement (21) comprend une première plaque de recouvrement (211) et une deuxième plaque de recouvrement (212), la première plaque de recouvrement (211) correspondant à une caméra arrière du corps de l'appareil (10), et la deuxième plaque de recouvrement (212) correspondant au module sonore (11) ; et
la première extrémité de l'élément de connexion extensible (22) est reliée à la deuxième plaque de recouvrement (212) ; dans lequel
la deuxième plaque de recouvrement (212) peut tourner par rapport au corps du dispositif (10), et le volume de la cavité correspond à un angle de rotation de la deuxième plaque de recouvrement (212).

2. Dispositif électronique selon la revendication 1, dans lequel, pendant la rotation de la deuxième plaque de recouvrement (212), la deuxième plaque de recouvrement (212) peut passer d'un état fermé à un état ouvert ; et
un volume de la cavité à l'état fermé est inférieur au volume de la cavité à l'état ouvert.

3. Dispositif électronique selon la revendication 2, dans lequel le composant de connexion extensible (22) comprend une première face d'extrémité de connexion reliée à la deuxième plaque de recouvrement (212) et une deuxième face d'extrémité de connexion reliée au module sonore (11) ; dans lequel
la section transversale de la première face d'extrémité de connexion est plus grande que la section transversale de la deuxième face d'extrémité de connexion.

4. Dispositif électronique selon la revendication 3, dans lequel un corps extensible du composant de connexion extensible (22) est de forme tubulaire, et la première face d'extrémité de connexion est hermétiquement reliée à la deuxième plaque de recouvrement (212) par un produit d'étanchéité.

5. Dispositif électronique selon l'une quelconque des revendications 1 à 4, dans lequel l'ensemble d'anneau décoratif comprend en outre un support d'anneau décoratif (23), le support d'anneau décoratif (23) est assemblé sur le corps du dispositif (10) à travers la première ouverture, et la première plaque de recouvrement (211) est reliée de manière fixe au support d'anneau décoratif (23) et la deuxième plaque de recouvrement (212) est reliée de manière rotative au support d'anneau décoratif (23).

6. Procédé de traitement audio, appliqué au dispositif électronique selon l'une quelconque des revendications 1 à 5, dans lequel le dispositif électronique comprend un corps de dispositif (10), une plaque de recouvrement (21), et un module sonore (11), et le procédé comprend :
l'obtention (701) d'informations sur la position de la plaque de recouvrement (21) par rapport au corps de l'appareil (10) ; et
l'ajustement (702) d'un paramètre audio du module sonore (11) dans le cas où l'information de position indique que la plaque de recouvrement (21) est dans un état ouvert.

7. Procédé selon la revendication 6, dans lequel le paramètre audio est la puissance de sortie audio, et l'ajustement (702) d'un paramètre audio du module sonore (11) comprend :
la réduction de la puissance de sortie audio du module sonore (11).

8. Appareil de traitement audio (800), appliqué au dispositif électronique selon l'une quelconque des revendications 1 à 5, dans lequel le dispositif électronique comprend un corps de dispositif (10), une plaque de recouvrement (21), et un module sonore (11), et l'appareil comprend :
un module d'obtention (801) configuré pour obtenir des informations sur la position de la plaque de recouvrement (21) par rapport au corps de l'appareil (10) ; et
un module d'ajustement (802) configuré pour régler un paramètre audio du module sonore (11) dans le cas où les informations de position indiquent que la plaque de recouvrement (21) est ouverte.

9. Dispositif électronique (900), comprenant un processeur (901) et une mémoire (902), dans lequel la mémoire (902) stocke un programme ou des instructions capables de s'exécuter sur le processeur (901), et lorsque le programme ou les instructions sont exécutés par le processeur (901), les étapes du procédé de traitement audio selon la revendication 6 ou 7 sont mises en œuvre.

10. Support de stockage lisible, dans lequel le support de stockage lisible stocke un programme ou des instructions, et lorsque le programme ou les instructions sont exécutés par un processeur, les étapes du procédé de traitement audio selon l'une quelconque des revendications 6 à 7 sont mises en œuvre.

11. Produit de programme informatique, dans lequel le produit de programme est stocké sur un support de stockage non volatil, et le produit de programme est exécuté par au moins un processeur pour mettre en œuvre les étapes du procédé de traitement audio selon la revendication 6 ou 7.

12. Puce, dans laquelle la puce comprend un processeur et une interface de communication, l'interface de communication est couplée au processeur, et le processeur est configuré pour exécuter un programme ou des instructions pour mettre en œuvre les étapes du procédé de traitement audio selon la revendication 6 ou 7.
